# EUROPEAN PATENT APPLICATION

(11) **EP 3 851 707 A1**
(43) Date of publication of application: **21.07.2021**
(21) Application number: 19860931.5
(22) Date of filing: 15.08.2019
(51) Int. Cl.: F16J 15/18

(54) **SEALING DEVICE**

(30) Priority: 12.09.2018 JP 2018170327
(71) Applicant: NOK Corporation, Tokyo 105-8585 (JP)
(72) Inventor: MAEKAWA Hirokazu, Aso-shi, Kumamoto 8692231 (JP)
(74) Representative: Global IP Europe Patentanwaltskanzlei
(86) International application number: PCT/JP2019/032063
(87) International publication number: WO 2020/054308

(57) **Abstract**

A sealing device which can reduce its sliding friction is provided. A sealing device is configured to be attached into an annular attachment groove 63 which is opened radially outward, and includes a first ring 21 and a second ring 31. The first ring 21 is formed of a rubber-like elastic material. The first ring 21 includes an inner peripheral contact surface 22, an outer peripheral contact surface 23, a cut portion 26, and an annular holding groove 25. The inner peripheral contact surface 22 is configured to contact a bottom surface 63c of the attachment groove 63. The outer peripheral contact surface 23 is configured to be positioned on a side opposite to the attachment groove 63. The cut portion 26 is arranged in a part of the circumference of the first ring. The annular holding groove 25 is opened in an end surface of the first ring on a pressure side. The second ring 31 is formed of a rubber-like elastic material and held in the holding groove 25.

## Description

### FIELD

The present disclosure relates to a sealing device.

### BACKGROUND

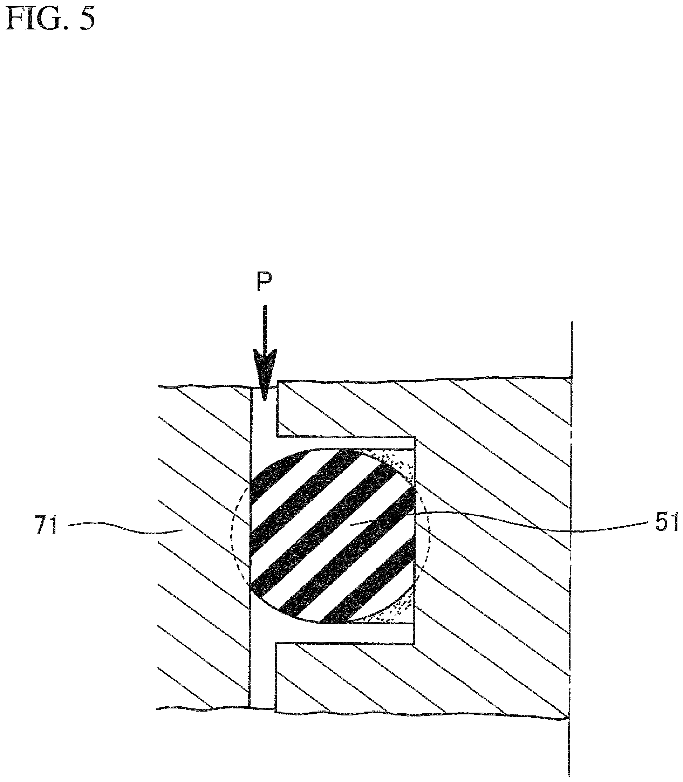

Packing (ring gasket) 51 which is formed of a general-purpose O ring or the like is currently used in clutch portions for Automatic Transmission (AT)/ Continuously Variable Transmission (CVT) for vehicles such as cars as shown in Fig. 5 (e.g., Japanese Utility-Model Laid-Open Publication No. S61-93668). In such an AT/CVT clutch portion, oil pressure P is applied to the packing 51, and the clutch portion can be operated by the oil pressure P maintained by the packing 51.

### BRIEF SUMMARY

### TECHNICAL PROBLEM

In recent years, under progression of low-carbon technology, fuel consumption improvement and energy loss reduction of units are required.

For this reason, also in the AT/CVT clutch portion, the packing 51 is required to reduce its sliding friction which is produced when sliding relative to a cooperative member 71.

It is an object of the present disclosure is to provide a sealing device which can reduce its sliding friction.

### SOLUTION TO PROBLEM

A sealing device according to the present disclosure is configured to be attached into an annular attachment groove which is opened radially outward. The sealing device includes first and second rings that are formed of a rubber-like elastic material. The first ring includes an inner peripheral contact surface, an outer peripheral contact surface, a cut portion, and an annular holding groove. The inner peripheral contact surface is configured to contact a bottom surface of the attachment groove. The outer peripheral contact surface is configured to be positioned on a side opposite to the attachment groove. The cut portion is arranged in a part of the circumference of the first ring. The annular holding groove is opened in an end surface of the first ring on a pressure side. The second ring is held in the holding groove.

### ADVANTAGEOUS EFFECTS

A sealing device of the present disclosure reduces its sliding friction.

### BRIEF DESCRIPTION OF DRAWINGS

Fig. 1 is a cross-sectional view of a principal part showing a sealing device according to an embodiment.
Fig. 2 is a cross-sectional view showing a principal part of the sealing device according to the embodiment taken at a cut portion which is arranged in a part of the circumference of the sealing device.
Fig. 3A is a side view showing a principal part of the sealing device with the cut portion being opened.
Fig. 3B is a side view showing a principal part of the sealing device with the cut portion being closed.
Fig. 4 is a cross-sectional view showing a principal part of a cut portion according to a modified embodiment.
Fig. 5 is a cross-sectional view of a principal part of a known sealing device discussed in background.

### DETAILED DESCRIPTION

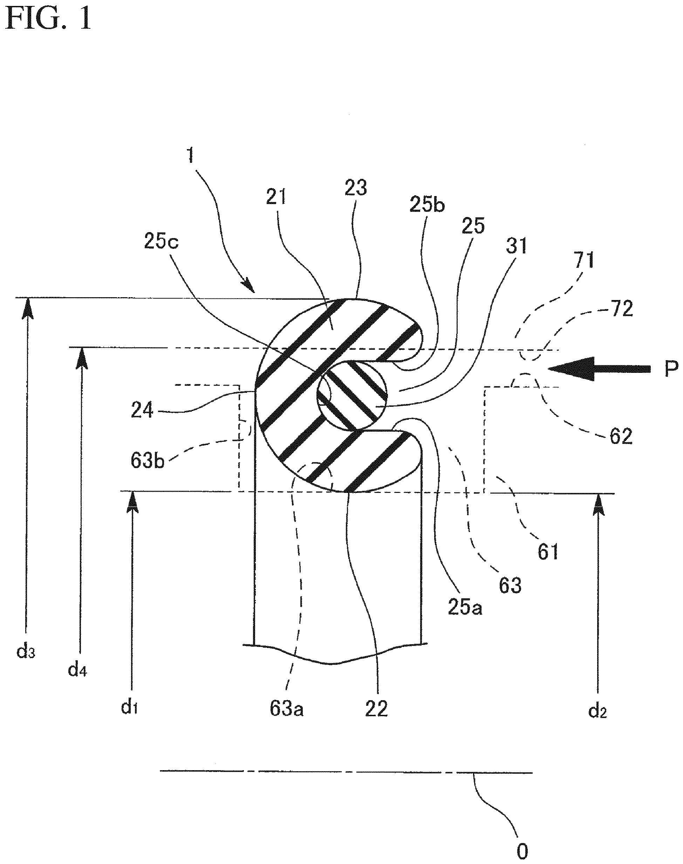

A sealing device 1 according to an embodiment is attached into an annular attachment groove 63 which is arranged in an outer peripheral surface 62 of an attachment member 61 as shown in Fig. 1. The attachment member 61 is a shaft, for example. The sealing device 1 seals a gap between the attachment member 61 and a cooperative member 71 which is arranged on the outer periphery side of the attachment member 61 to maintain oil pressure P. The cooperative member 7 is a housing, for example. The attachment groove 63 is opened radially outward. The attachment groove 63 has a rectangular shape as viewed in a section.

The sealing device 1 includes a first ring 21 and a second ring 31. The second ring 31 is held in the first ring 21. In other words, the first ring 21 and the second ring 31 are designed for use in combination with each other.

The first ring 21 is formed of a rubber-like elastic material which has good sealing performance. The first ring 21 has a circular shape as viewed in a cross-sectional view of the sealing device.

The first ring 21 has an inner diameter d1 substantially equal to a diameter d2 of a bottom surface 63a of the attachment groove 63 (d1 = d2 or d1 =~ (approximately equal to) d2). The first ring 21 has an outer diameter d3 greater than an inner diameter d4 of the cooperative member 71 (d3 > d4). The first ring 21 has an inner peripheral contact surface 22 on the inner periphery side. The first ring 21 has an outer peripheral contact surface 23 on the outer periphery side.

When the first ring 21 is attached into the attachment groove 63 and is installed onto the cooperative member 71, the inner peripheral contact surface 22 contacts the bottom surface 63a of the attachment groove 63, and the outer peripheral contact surface 23 slidably contacts the inner peripheral surface 72 of the cooperative member 71.

In addition, the first ring 21 has a contact surface 24 which is positioned on a side opposite to the oil pressure P side. When the oil pressure P is applied to the first ring 21, the first ring 21 is displaced toward the opposite side (leftward in Fig. 1) opposite to the oil pressure P side in the attachment groove 63 so that the contact surface 24 contacts one side surface 63b of the attachment groove 63.

The first ring 21 has an annular holding groove 25 which holds the second ring 31. The holding groove 25 is defined by the inner-peripheral-side surface 25a, the outer-peripheral-side surface 25b, and the bottom surface 25c. The inner-peripheral-side surface 25a and the outer-peripheral-side surface 25b have a linear shape parallel to the center axis O of the sealing device 1 as viewed in the cross-sectional view. The bottom surface 25c has a semicircular shape as viewed in the cross-sectional view. The holding groove 25 is opened in a pressure-side (right side in Fig. 1) end surface of the first ring 21.

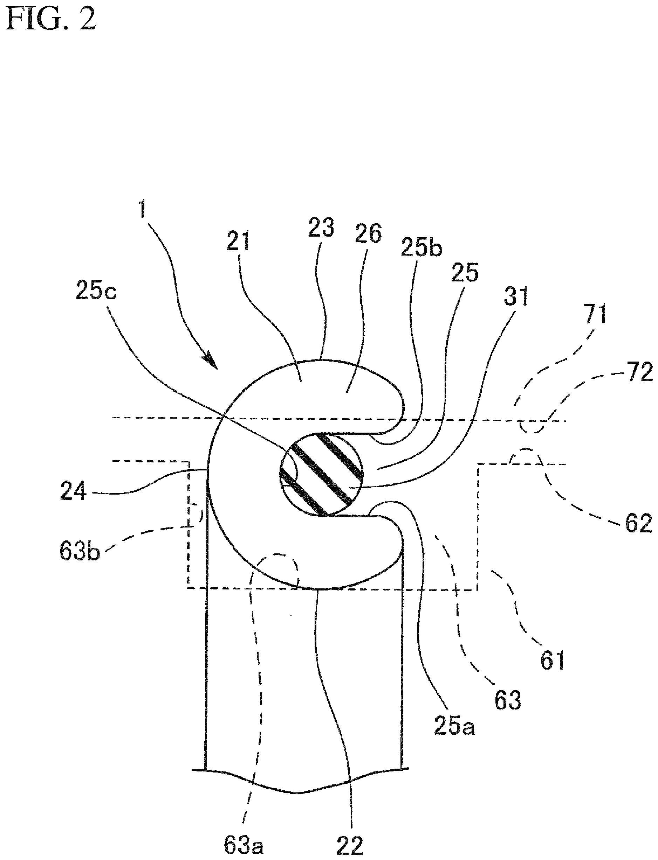

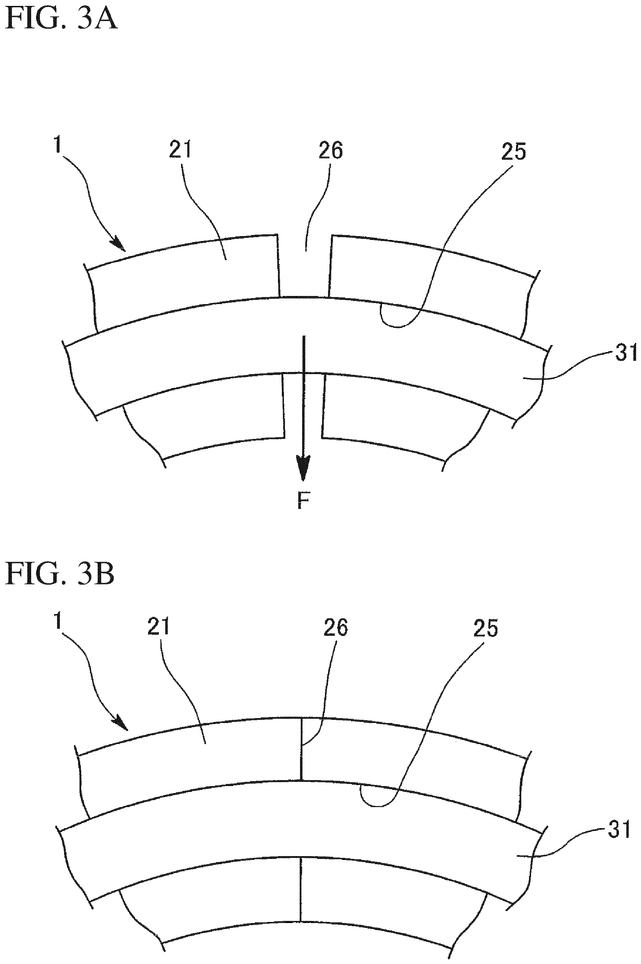

As shown in Fig. 2 and 3A, a cut portion 26 is provided by cutting a part of the circumference of the first ring 21. The cut portion 26 completely disconnects the first ring 21 at one position on the circumference. That is, any non-disconnected part in which the first ring 21 is not disconnected does not remain in the cut portion 26.

The second ring 31 is formed of a rubber-like elastic material which has good expansion/contraction performance. The second ring 31 has a circular shape as viewed in a cross-sectional view of the sealing device. The second ring 31 is press-fitted into the groove bottom of the holding groove 25 without adhesive, and is held by the first ring 21. It is noted that the first ring 21 which has the cut portion 26 cannot solely keep its annular ring shape as discussed above. For this reason, the second ring 31 keeps the first ring 21 in the annular shape.

As discussed above, the first ring 21 has a sectionally circular shape, and the second ring 31 also has a sectionally circular shape. The sectionally circular-shaped first ring 21 and the sectionally circular-shaped second ring 31 are concentrically arranged as viewed in the cross-sectional view.

Rubber-like elastic ring bodies which have a cut portion on their circumference can have reduced sliding friction in sliding movement relative to the cooperative member as compared with rubber-like elastic ring bodies which do not have a cut portion. Because the sealing device 1 according to this embodiment has the cut portion 26 which is arranged in a part of the circumference of the first ring 21, its sliding friction can be reduced as compared with the known ring gasket shown in Fig. 5.

The first ring 21 according to this embodiment has the inner peripheral contact surface 22 which is configured to contact the bottom surface 63a of the attachment groove 63, the outer peripheral contact surface 23 which slidably contacts the inner peripheral surface 72 of the cooperative member 71, and the contact surface 24 which contacts one side surface 63b of the attachment groove 63. Accordingly, the inner peripheral contact surface 22 and the contact surface 24 seal a gap between the first ring 21 and the attachment member 61, while the outer peripheral contact surface 23 seals a gap between the first ring 21 and the cooperative member 71. Therefore, the sealing device can have sufficient sealing performance against the oil pressure P.

Operation/working-effects of the cut portion 26 which is arranged in the first ring 21 are now described.

Firstly, the inner diameter d1 of the first ring 21 is substantially equal to the diameter d2 of the bottom surface 63a of the attachment groove 63, and the outer diameter d3 of the first ring 21 is greater than the inner diameter d4 of the cooperative member 71. According to these dimensions, when the sealing device 1 is attached into the attachment groove 63 and installed onto the cooperative member 71, the outer diameter d3 of the first ring 21 is reduced while the inner diameter d1 is reduced. As a result, the diameter of the first ring 21 is reduced. The cut portion 26 which is created in the circumferential direction is closed by the reduction of the diameter of the first ring 21 so that the ends of the cut portion 26 contact each other as shown from Fig. 3A to Fig. 3B. Therefore, leakage of oil pressure P through the cut portion 26 can be prevented.

In addition, the inner diameter of the second ring 31 before press-fit is smaller than the diameter of the inner-peripheral-side surface 25a of the holding groove 25. According to this dimension, when the second ring 31 is press-fitted into the holding groove 25 of the first ring 21, a radially-inward tightening force F is applied to the second ring 31. The tightening force F reduces the diameter of the first ring 21. The cut portion 26 is closed by the reduction of the diameter of the first ring 21 so that the ends of the cut portion 26 contact each other as shown from Fig. 3A to Fig. 3B. Therefore, leakage of oil pressure P through the cut portion 26 can be prevented. During this diameter reduction, contact surfaces of the first ring 21 and the second ring 31 slide on each other. In order to enhance smooth slide of the contact surfaces, the contact surfaces (i.e., interior surface of the holding groove 25 of the first ring 21 and the surface of the second ring 31) are preferably slippery.

If a small amount of leakage is available for sealing performance of the sealing device 1 against the oil pressure P, the cut portion 26 may be not completely closed but partially or entirely opened.

In addition, the second ring 31 according to this embodiment is formed of a rubber-like elastic material which has good expansion/contraction performance. For this reason, the attachment workability of the sealing device 1 into the attachment groove 63 can be improved.

Although the cut portion 26 of the sealing device 1 according to this embodiment has been described to completely disconnect the first ring 21 at one position on the circumference, the cut portion 26 may partially disconnect the first ring 21 at one or more positions on the circumference. In this case, a non-disconnected part in which the first ring 21 is not disconnected remains in the cut portion 26.

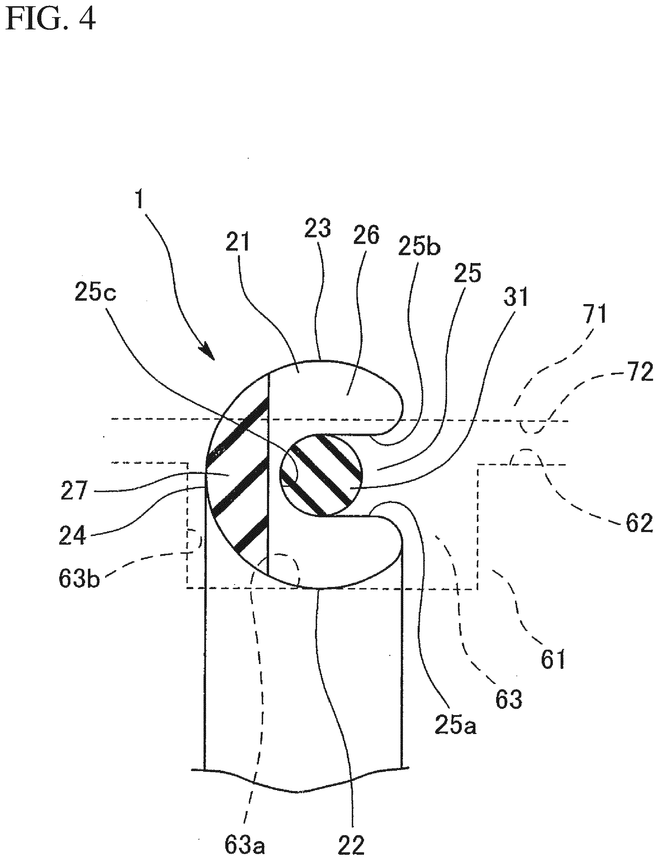

For example, in a sealing device 1 according to a modified embodiment shown in Fig. 4, a cut portion 26 is provided by cutting a part of the circumference of the first ring 21, and is arranged in a part of the circumference of the first ring. The cut portion 26 partially disconnects the first ring 21 at one or more positions on the circumference.

A non-disconnected, continuous-ring forming part 27 remains in the cut portion 26 according to the modified embodiment. According to this arrangement, a leakage path through the cut portion 26 can be closed by bringing the continuous-ring forming part 27 in contact with the bottom surface 63a of the attachment groove 63 or the inner peripheral surface 72 of the cooperative member 71 when the sealing device is attached. Therefore, the sealing device can have further improved sealing performance against the oil pressure P.

### INDUSTRIAL APPLICABILITY

A sealing device according to the present disclosure can be used for transmissions for vehicles such as cars. Also, the sealing device according to the present disclosure can be used as a reciprocating seal for construction machines, general industrial machines, or the like.

### Reference Signs List

- 1 ...: Sealing Device
- 21 ...: First Ring
- 22, 23, 24 ...: Contact surface
- 25 ...: Holding Groove
- 25a ...: Inner-Peripheral-Side Surface
- 25b ...: Outer-Peripheral-Side Surface
- 25c ...: Bottom Surface
- 26 ...: Cut Portion
- 27 ...: Continuous-Ring Forming Part
- 31 ...: Second Ring
- 61 ...: Attachment Member
- 62 ...: Outer Peripheral Surface
- 63 ...: Attachment Groove
- 63a ...: Bottom Surface
- 63b ...: Side Surface
- 71 ...: Cooperative Member
- 72 ...: Inner Peripheral Surface
- O ...: Center Axis
- P ...: Oil Pressure

## Claims

1. A sealing device configured to be attached into an annular attachment groove which is opened radially outward, the sealing device comprising:
a first ring formed of a rubber-like elastic material, the first ring including
an inner peripheral contact surface configured to contact a bottom surface of the attachment groove,
an outer peripheral contact surface configured to be positioned on a side opposite to the attachment groove,
a cut portion arranged in a part of the circumference of the first ring, and
an annular holding groove opened in an end surface of the first ring on a pressure side; and
a second ring formed of a rubber-like elastic material and held in the holding groove.

2. The sealing device according to claim 1, wherein the cut portion completely disconnects the first ring at one position on the circumference.

3. The sealing device according to claim 1, wherein the cut portion partially disconnects the first ring at one or more positions on the circumference.

4. The sealing device according to any one of claims 1 to 3, wherein
the holding groove includes
inner- and outer-peripheral-side surfaces that have a linear cross-sectional shape parallel to the center axis of the sealing device, and
a bottom surface that has a semicircular shape as viewed in the cross-sectional view.

5. The sealing device according to any one of claims 1 to 4, wherein
the first ring has a circular cross-sectional shape, and
the second ring has a circular cross-sectional shape.

6. The sealing device according to claim 5, wherein the first and second rings are concentrically arranged as viewed in the cross-sectional view.

7. The sealing device according to any one of claims 4 to 6, wherein the second ring before press-fit has an inner diameter smaller than the diameter of the inner-peripheral-side surface.
